# EUROPÄISCHE PATENTSCHRIFT

(11) **EP 4 209 289 B1**
(45) Veröffentlichungstag und Bekanntmachung des Hinweises auf die Patenterteilung: **19.06.2024**
(21) Anmeldenummer: 22150775.9
(22) Anmeldetag: 10.01.2022
(51) Int. Cl.: B21D 37/16, B21D 45/02, B21D 53/04

(54) **VERFAHREN UND WARMFORMWERKZEUG ZUR HERSTELLUNG EINER WÄRMEÜBERTRAGERPLATTE**
METHOD AND HOT FORMING TOOL FOR MANUFACTURING A HEAT EXCHANGER PLATE
PROCÉDÉ ET OUTIL DE FORMAGE À CHAUD DESTINÉS À LA FABRICATION D'UNE PLAQUE D'ÉCHANGE DE CHALEUR

(43) Veröffentlichungstag der Anmeldung: 12.07.2023
(73) Patentinhaber: Benteler Automobiltechnik GmbH, 33102 Paderborn (DE)
(72) Erfinder: DÜPMEIER, Tobias, 33100 Paderborn (DE); FORTMEIER, Günter, 33129 Delbrück (DE)
(74) Vertreter: Ksoll, Peter

(56) Entgegenhaltungen:
- EP-A2- 3 771 878
- DE-A1-102013 008 609
- GB-A- 1 495 655
- US-A1- 2014 295 205

## Beschreibung

Die Erfindung betrifft ein Verfahren und ein Warmformwerkzeug zur Herstellung einer Wärmeübertragerplatte.

Bei einer Wärmeübertragerplatte der vorliegend in Rede stehenden Art handelt es sich insbesondere um eine Kühlplatte zur Batteriekühlung.

In Elektrofahrzeugen, gleich ob rein elektrisch betriebene Fahrzeuge, Hybridfahrzeuge oder Plug-in-Hybrid-Fahrzeuge kommen wiederaufladbare Batterien zum Einsatz, die eine Vielzahl von in Reihe und/oder parallel geschaltete elektrische Speicherzellen aufweisen. Hierbei können elektrische Speicherzellen zu Batteriemodulen zusammengefasst sein, aus denen die Batterie aufgebaut ist.

Die Batterien sind empfindlich im Hinblick auf eine unterschiedliche Temperaturverteilung, wodurch es zu einer Überhitzung und einem vorzeitigen Altern kommen kann. Um die Batterien in einem optimalen Temperaturbereich zu halten, kommen Kühlvorrichtungen zum Einsatz. Diese sollen sicherstellen, dass nicht benötigte Abwärme, die beim Betreiben der Batterien entsteht, von den Batterien abgeführt und die Batterie auf einem gleichmäßigen Temperaturniveau temperiert wird.

Zur Kühlung von Batterien bzw. Batteriemodulen werden Wärmeübertragerplatten eingesetzt, welche die Batterien direkt oder indirekt kontaktieren. Die Wärmeübertragerplatten werden von einem Kühlfluid durchflossen. Wärmeübertragerplatten bestehen üblicherweise aus zwei Plattenelementen, die zusammengesetzt und gefügt einen oder mehrere dazwischen liegende Kanäle begrenzen. Häufig sind die Wärmeübertragerplatten aus Leichtmetallblechen, insbesondere Aluminiumblechen, gefertigt. Bauart- oder leistungsbedingt werden zur Kühlung auch Wärmeübertragerplattenanordnungen oberhalb und unterhalb der Batterien angebracht.

Eine Kühlvorrichtung für eine Fahrzeugbatterie mit einer Wärmeübertragerplatte bzw. einer Kühlplatte zählt durch die EP 2 828 922 B1 zum Stand der Technik.

Aus der DE 10 2015 216 719 A1 ist eine Kühlplatte bekannt. In der Kühlplatte ist ein Kühlkanal und ein damit kommunizierender Zulauf und ein Ablauf angeordnet. Im Bereich des Zulaufs und des Ablaufs ist jeweils ein Anschlussstutzen vorgesehen, der zwischen dem Oberteil und dem Unterteil der Kühlplatte eingeklemmt ist.

Eine Kühlplatte zur Batteriekühlung mit einer Strukturplatte und einer Deckplatte ist in der DE 10 2014 217 728 A1 beschrieben.

Ein Verfahren zur Herstellung einer Wärmeübertragerplatte bzw. eines Plattenwärmetauschers offenbart die EP 3 771 878 A2. Hierzu wird ein Plattenstapel bereitgestellt, welcher aus zumindest zwei Plattenelementen aus einem metallischen Werkstoff mit einem zwischen den Plattenelementen angeordneten Lotwerkstoff gebildet wird. Der Plattenstapel wird dann auf eine erste Temperatur aufgeheizt und anschließend in ein Formwerkzeug eingelegt, dessen Formflächen Kavitäten für vorgesehene Kanalstrukturen aufweisen. Die Kanalstrukturen werden durch lokale innendrucktechnische Umformung in zumindest einem Plattenelement ausgebildet. Anschließend wird der Plattenstapel auf eine zweite Temperatur aufgeheizt und die Plattenelemente des Plattenstapels an den in Anlage befindlichen Flächen löttechnisch gefügt.

Der Erfindung liegt ausgehend vom Stand der Technik die Aufgabe zugrunde, ein Verfahren zur Herstellung einer Wärmeübertragerplatte zu verbessern und effizienter zu gestalten sowie ein anlagentechnisch verbessertes Warmformwerkzeug zur Herstellung einer Wärmeübertragerplatte aufzuzeigen.

Die Lösung des verfahrensmäßigen Teils der Aufgabe besteht in einem Verfahren gemäß Anspruch 1.

Ein Warmformwerkzeug zur Herstellung einer Wärmeübertragerplatte ist Gegenstand von Anspruch 15.

Vorteilhafte Weiterbildungen und Ausgestaltungen sind Gegenstand der abhängigen Ansprüche.

Ein Verfahren zur Herstellung einer Wärmeübertragerplatte, insbesondere einer Kühlplatte weist folgende Schritte auf:
- Bereitstellen eines Plattenstapels, welcher aus zumindest zwei Plattenelementen aus einem metallischen Werkstoff mit einem zwischen den Plattenelemente angeordneten Lotwerkstoff gebildet wird;
- Überführen des Plattenstapels in ein beheiztes Warmformwerkzeug, welches ein Unterwerkzeug und ein Oberwerkzeug und Kontaktflächen mit zumindest einer Kanalkavität aufweist;
- Einlegen des Plattenstapels in das Warmformwerkzeug, wobei der Plattenstapel auf Abstandelementen positioniert wird, welche im Unterwerkzeug nachgiebig angeordnet sind und gegenüber der Kontaktfläche des Unterwerkzeugs vorstehenden;
- Schließen des Warmformwerkzeugs, wobei das Unterwerkzeug und das Oberwerkzeug relativ zueinander verlagert werden;
- Fortführen der Schließbewegung und Einklemmen des Plattenstapels zwischen dem Unterwerkzeug und dem Oberwerkzeug, wobei die Abstandselemente im Unterwerkzeug in das Unterwerkzeug verlagert werden und der Plattenstapel in Flächenkontakt zwischen dem Unterwerkzeug und dem Oberwerkzeug gelangt;
- Aufheizen des Plattenstapels und
- Beaufschlagung eines Zwischenraums zwischen den Plattenelementen des Plattenstapels mit Innendruck durch Einleiten eines Wirkmediums und Ausbilden eines Kanals durch innendrucktechnische Umformung zumindest eines Plattenelementbereichs in die Kanalkavität, wobei die Kanalkavität entlüftet wird und
- Schmelzen des Lotwerkstoffs zwischen den Plattenelemente und löttechnische Fügung der Plattenelemente an in Anlage befindlichen Fügeflächen der Plattenelemente;
- Öffnen des Warmformwerkzeugs, wobei das Unterwerkzeug und das Oberwerkzeug relativ zueinander verlagert werden, wobei die Abstandselemente im Unterwerkzeug aus dem Unterwerkzeug bewegt werden, so dass der Plattenstapel auf den Abstandselementen im Unterwerkzeug in einem Abstand vom Unterwerkzeug gehalten wird;
- Halten und Abkühlen des Plattenstapels;
- Öffnen des Warmformwerkzeug bis in eine Entnahmeposition und Entnahme der Wärmeübertragerplatte aus dem Warmformwerkzeug.

Das erfindungsgemäße Verfahren ist verfahrenstechnisch verbessert und ermöglicht in effizienter Weise die Herstellung von qualitativ hochwertigen Wärmeübertragerplatten. Die Herstellung von Wärmeübertragerplatten ist herstellungstechnisch und für den betrieblichen Einsatz der Wärmeübertragerplatten optimiert.

Das Warmformwerkzeug weist ein beheizbares Unterwerkzeug und ein beheizbares Oberwerkzeug auf. Zur Herstellung der Wärmeübertragerplatten ist das Warmformwerkzeug auf eine Werkzeugtemperatur aufgeheizt.

Ein Plattenstapel ist aus zumindest zwei Plattenelementen aus einem metallischen Werkstoff gebildet. Zwischen den Plattenelementen ist ein Lotwerkstoff angeordnet bzw. appliziert.

Beim Bilden des Plattenstapels oder nach dem Bilden des Plattenstapels kann dieser mit einem Fluidanschluss in Form eines Anschlussstutzens versehen werden. Der Anschlussstutzen kann beispielsweise durch eine Anschlussöffnung in einem der Plattenelemente eingesetzt werden.

Der Plattenstapel wird dann in das Umformwerkzeug eingelegt. Hierbei wird der Plattenstapel auf Abstandselementen positioniert. Der Plattenstapel gelangt folglich beim Einlegen noch nicht in Kontakt mit dem beheizten und temperierten Unterwerkzeug. Die Abstandselemente stehen gegenüber den Kontaktflächen des Unterwerkzeugs vor. Diese Maßnahme ist ein vorteilhafter Aspekt des erfindungsgemäßen Verfahrens und trägt wesentlich zur effizienten Herstellung der Wärmeübertragerplatten bei.

Nachdem der Plattenstapel auf den Abstandselementen angeordnet und positioniert ist, wird das Warmformwerkzeug geschlossen. Das Unterwerkzeug und das Oberwerkzeug werden hierzu relativ zueinander verlagert. Insbesondere wird das Oberwerkzeug auf das Unterwerkzeug abgesenkt. Bei der Schließbewegung wird der Plattenstapel zwischen dem Unterwerkzeug und dem Oberwerkzeug aufgenommen und eingeklemmt. Mit dem Fortführen der Schließbewegung werden die Abstandselemente im Unterwerkzeug in das Unterwerkzeug verlagert, wobei der Plattenstapel in Flächenkontakt zwischen dem Unterwerkzeug und dem Oberwerkzeug gelangt.

Der Plattenstapel wird im Warmformwerkzeug aufgeheizt.

Ein Zwischenraum zwischen den Plattenelementen des Plattenstapels wird mit Innendruck beaufschlagt. Ein Zwischenraum ist ein Bereich zwischen den aneinander liegenden Plattenelementen, wobei nicht notwendigerweise ein Spalt zwischen den Plattenelementen im Bereich des Zwischenraums vorhanden sein muss. Die Beaufschlagung des Zwischenraums mit einem Innendruck erfolgt durch Einleiten eines Wirkmediums in den Zwischenraum. Hierbei wird ein Kanal durch innendrucktechnische Umformung zumindest eines Plattenelementbereichs in die Kanalkavität in der oder den Kontaktflächen des Warmformwerkzeugs ausgebildet. Während der innendrucktechnischen Umformung und Ausbildung des Kanals wird die Kanalkavität entlüftet. Die Entlüftung bewirkt einen Druckausgleich. Diese Maßnahme ist ebenfalls ein wesentlicher und vorteilhafter Aspekt des erfindungsgemäßen Verfahrens.

Der Lötwerkstoff wird infolge der Werkzeugtemperatur des Umformwerkzeugs zwischen den Plattenelementen geschmolzen und die Plattenelemente werden löttechnisch an den in Anlage befindlichen Fügeflächen der Plattenelemente gefügt.

Das Warmformwerkzeug wird dann geöffnet, wobei das Unterwerkzeug und das Oberwerkzeug relativ zueinander verlagert und auseinander bewegt werden. Bei der Öffnungsbewegung bewegen sich die Abstandselemente im Unterwerkzeug aus dem Unterwerkzeug heraus, so dass der Plattenstapel auf den Abstandselementen im Unterwerkzeug in einem Abstand vom Unterwerkzeug gehalten wird. Der Plattenstapel wird durch die Abstandselemente im Unterwerkzeug angehoben.

Der gefügte warme Plattenstapel wird auf den Abstandselementen liegend gehalten und abgekühlt. Parallel wird das Warmformwerkzeug weiter geöffnet bis in eine Entnahmeposition. Die Wärmeübertragerplatte kann dann aus dem Warmformwerkzeug entnommen werden.

Auch das Halten des Plattenstapels auf den Abstandselementen nach dem Umformvorgang ist ein vorteilhafter Aspekt des erfindungsgemäßen Verfahrens. Der Plattenstapel liegt nach dem Öffnen des Warmformwerkzeugs auf den Abstandselementen. Von dem auf Temperatur befindlichen Unterwerkzeug ist der Plattenstapel durch die Abstandselemente beabstandet. Die Abstandselemente bewegen sich beim Öffnen des Warmformwerkzeugs selbsttätig oder folgegesteuert aus dem Unterwerkzeug heraus. Der Plattenstapel wird sanft und dosiert vom Unterwerkzeug angehoben.

Der aufgeschmolzene Lotwerkstoff zwischen den Plattenelementen kann weiter abkühlen. Die Gefahr, dass der Plattenstapel beim Öffnen des Warmformwerkzeugs unkontrolliert bewegt und die Plattenelemente beispielsweise in Folge von Anbackungen verschoben werden, ist unterbunden.

Besonders vorteilhaft weist auch das Oberwerkzeug Abstandselemente auf, welche im Oberwerkzeug nachgiebig angeordnet sind. Die Abstandselemente des Oberwerkzeugs stehen gegenüber den Kontaktflächen des Oberwerkzeugs vor. Beim Einlegen des Plattenstapels in das Warmformwerkzeug wird dieser auf den Abstandselementen im Unterwerkzeug positioniert. Der Plattenstapel liegt auf den Abstandselementen im Unterwerkzeug mit Abstand zum Unterwerkzeug. Beim Schließen des Warmformwerkzeugs kommen die gegenüber der Kontaktfläche des Oberwerkzeugs vorstehenden Abstandselemente des Oberwerkzeugs mit dem Plattenstapel in Kontakt.

Die Abstandselemente im Oberwerkzeug werden beim Schließen des Warmformwerkzeugs in das Oberwerkzeug verlagert.

Beim Öffnen des Warmformwerkzeugs werden die Abstandselemente im Oberwerkzeug aus dem Oberwerkzeug bewegt. Hierbei stehen die Abstandselemente in Kontakt mit dem Plattenstapel. Die Abstandselemente im Oberwerkzeug kontaktieren den Plattenstapel und halten den warmen Plattenstapel in Position.

Sowohl die Abstandselemente im Unterwerkzeug als auch die Abstandselemente im Oberwerkzeug sind dafür eingerichtet, sich selbsttätig aus ihren Aufnahmen im Unterwerkzeug bzw. Oberwerkzeug zu bewegen. Hierzu sind die Abstandselemente mit Aktuatoren ausgerüstet oder durch Antriebselemente bewegbar. Beispielsweise können die Abstandselemente mit Federelementen zusammenwirken. Eine Aktuatoreinrichtung mit Aktuatoren kann eine das Unterwerkzeug und/oder das Oberwerkzeug längs oder quer durchsetzende Betätigungsleiste umfassen, welche jeweils mit den in einer Reihe angeordneten Abstandselementen zusammenwirken. Die Betätigungsleiste ihrerseits wird durch Linearantriebe, insbesondere Kolbenzylindereinheiten, betätigt.

Das Warmformwerkzeug ist auf eine Werkzeugtemperatur aufgeheizt, bei der sowohl der Umformvorgang als auch der löttechnische Fügevorgang durchgeführt wird. Insbesondere beträgt die Werkzeugtemperatur zwischen 540°C und 670°C. Besonders vorteilhaft liegt die Werkzeugtemperatur zwischen 550°C und 640°C.

Ein weiterer Aspekt der Erfindung sieht vor, dass ein Plattenelement vor dem Bilden des Plattenstapels oder die Plattenelemente beim Bilden des Plattenstapels oder der gebildete Plattenstapel mit einem Fluidanschluss versehen wird bzw. werden.

Das Wirkmedium zur Ausformung des Kanals wird insbesondere über den Fluidanschluss eingeleitet.

Der Plattenstapel wird bei der Herstellung der Wärmeübertragerplatten zwischen dem Unterwerkzeug und dem Oberwerkzeug eingespannt. Bei der innendrucktechnischen Umformung und Ausbildung des Kanals wird der Plattenstapel umlaufend entlang aneinander liegender Randbereiche und/oder benachbart zu der Kanalkavität mittels eines oder mehrerer Druckelemente abgedichtet. Die Druckelemente können durch eine entsprechende Konturgebung in den Formflächen des Unterwerkzeugs und/oder des Oberwerkzeugs ausgebildet sein, beispielsweise durch Abdichtsicken. Die Dichtelemente können umlaufend entlang aneinander liegender Randbereiche von Oberwerkzeug und/oder Unterwerkzeug vorgesehen sein. Des Weiteren können Dichtelemente benachbart zu der Kanalkavität vorgesehen sein. Die Dichtelemente gewährleisten einen besonders vorteilhaften Umformvorgang, insbesondere, dass der Umformvorgang im Bereich der Kanalkavität stattfindet. Auf diese Weise wird eine hohe Maßhaltigkeit und Umformgenauigkeit sichergestellt.

Die Plattenelemente bestehen aus Metall. Insbesondere bestehen die Plattenelemente aus einem Leichtmetallwerkstoff und hier insbesondere aus einer Aluminiumlegierung.

Im Rahmen des erfindungsgemäßen Verfahrens werden vorzugsweise und effektiv Plattenelemente verwendet, welche mit einem Lotwerkstoff versehen sind, wobei der Lotwerkstoff in Form einer plattierten Lotschicht auf ein Plattenelement aufgebracht ist.

Des Weiteren kann bei dem erfindungsgemäßen Verfahren vorgesehen sein, dass beim Einklemmen und Halten des Plattenstapels zwischen dem Unterwerkzeug und dem Oberwerkzeug eine an einer Oberfläche des Plattenelements vorhandene Oxidschicht aufgebrochen wird. Dies kann insbesondere durch mechanische Mittel zum Aufbrechen der Oxidschicht erfolgen.

Ein weiterer vorteilhafter Aspekt besteht darin, dass die löttechnische Fügung ohne Flussmittel, also flussmittelfrei, durchgeführt wird.

Wie bereits erwähnt, können die Abstandselemente selbsttätig oder aktuatorisch verlagert werden.

Die erfindungsgemäße Herstellung von Wärmeübertragerplatten kann des Weiteren verbessert werden, wenn zwischen die Kontaktflächen des Warmformwerkzeugs und den Außenflächen der Plattenelemente oder des Plattenstapels ein Trennmittel aufgebracht wird.

Die im Unterwerkzeug angeordneten Abstandselemente weisen eine untere Begrenzung auf. Die im Oberwerkzeug angeordneten Abstandselemente weisen eine obere Begrenzung auf. Die untere Begrenzung und die obere Begrenzung begrenzen den jeweiligen Verlagerungsweg der Abstandselemente aus dem Unterwerkzeug bzw. dem Oberwerkzeug und definieren so die Endposition der Abstandselemente und damit die Position eines Plattenstapels, wenn dieser auf den unteren Abstandselementen positioniert zwischen den unteren Abstandselementen und den oberen Abstandselementen gehalten wird.

Die untere Begrenzung und die obere Begrenzung können einstellbar sein. Auf diese Weise ist eine Anpassung auf unterschiedlich dicke Plattenstapel möglich.

Die Erfindung ist nachfolgend anhand von Zeichnungen näher beschrieben. Es zeigen:
- Figur 1: in einer Perspektive ein Plattenelement zur Bildung eines Plattenstapels;
- Figur 2: ebenfalls in perspektivischer Darstellungsweise eine Wärmeübertragerplatte;
- Figur 3: ein Warmformwerkzeug;
- Figur 4: das Warmformwerkzeug mit zwischen dem Unterwerkzeug und dem Oberwerkzeug aufgenommenen Plattenstapel;
- Figur 5: das Warmformwerkzeug entsprechend der Darstellung von Figur 3 in einer Seitenansicht;
- Figur 6: das Warmformwerkzeug mit eingelegtem Plattenstapel in einer Seitenansicht bei geöffnetem Oberwerkzeug;
- Figur 7: ebenfalls in einer Seitenansicht das Warmformwerkzeug bei weiter geschlossenem Oberwerkzeug;
- Figur 8: das Warmformwerkzeug entsprechend der Darstellung von Figur 7 in einer perspektivischen Ansicht;
- Figur 9: das Warmformwerkzeug in der Seitenansicht und geschlossenem Zustand;
- Figur 10: das Warmformwerkzeug nach dem Umformvorgang in einer ersten Offenstellung;
- Figur 11: das Warmformwerkzeug nach dem Umformvorgang in einer zweiten Offenstellung;
- Figur 12: das Warmformwerkzeug nach dem Umformvorgang in einer Perspektive und
- Figur 13: einen Ausschnitt aus dem Warmformwerkzeug in vergrößerter Darstellung.

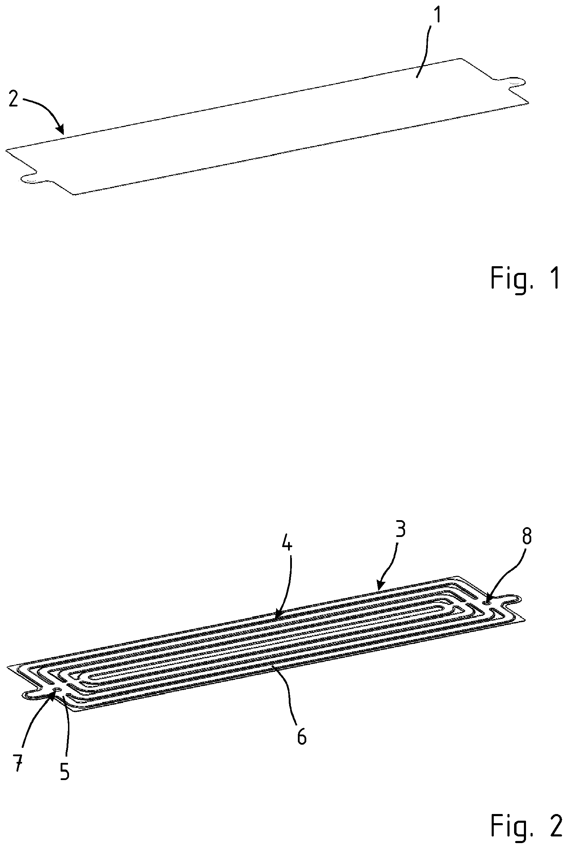

Figur 1 zeigt ein vorkonfektioniertes Plattenelement 1 aus Leichtmetall. Insbesondere besteht das Plattenelement 1 aus einem Leichtmetallwerkstoff, bevorzugt aus Aluminium oder einer Aluminiumlegierung.

Zwei solcher Plattenelemente 1 werden flächig aufeinander positioniert und bilden einen Plattenstapel 2. Die aneinander liegenden Flächen der Plattenelemente 1 sind ganz oder bereichsweise mit einem Lotwerkstoff versehen. Insbesondere ist ein Lotwerkstoff in Form einer plattierten Lotschicht auf einem Plattenelement 1 aufgebracht.

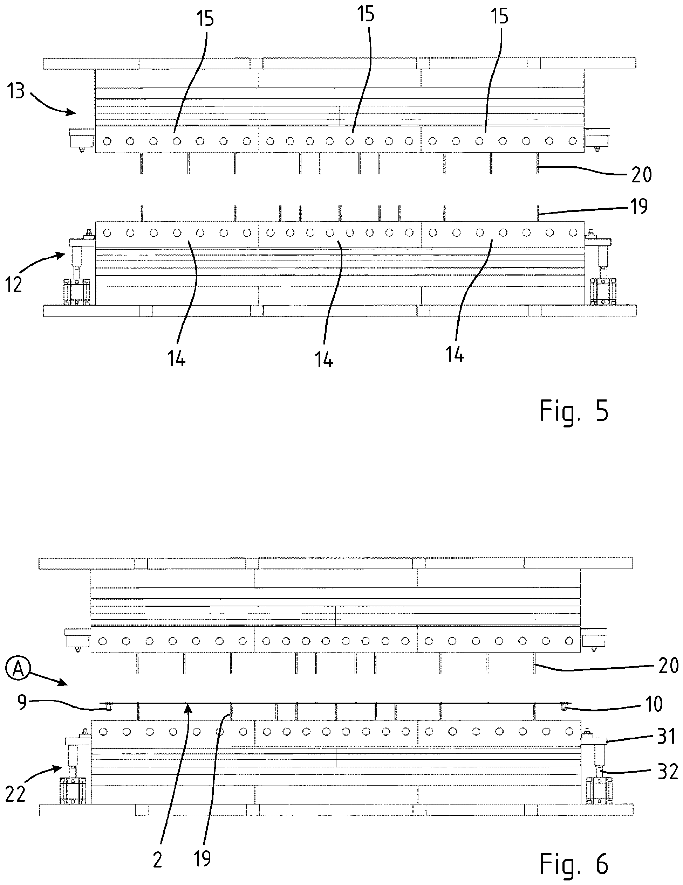

Die Figur 2 zeigt eine Wärmeübertragerplatte 3, welche aus einem Plattenstapel 2 hergestellt ist. Der Plattenstapel 2 ist aus einem ersten Plattenelement 1 und einem zweiten Plattenelement 1 gebildet. Die Wärmeübertragerplatte 3 und dessen Plattenstapel 2 weisen eine Kanalstruktur 4 mit mindestens einem Kanal 5 auf. Kanalabschnitte 6 des Kanals 5 verlaufen schleifenförmig ineinander und kommunizieren zwischen Fluidanschlüssen 7, 8. Ein Fluidanschluss 7 mit einem Anschlussstutzen 9 ist für die Zuführung eines Kühlfluids und ein Fluidanschluss 8 mit einem Anschlussstutzen 10 ist für die Abführung eines Kühlfluids bestimmt. Die Anschlussstutzen 9 und 10 erkennt man in den Darstellungen der Figuren 6, 7, 10 und 11.

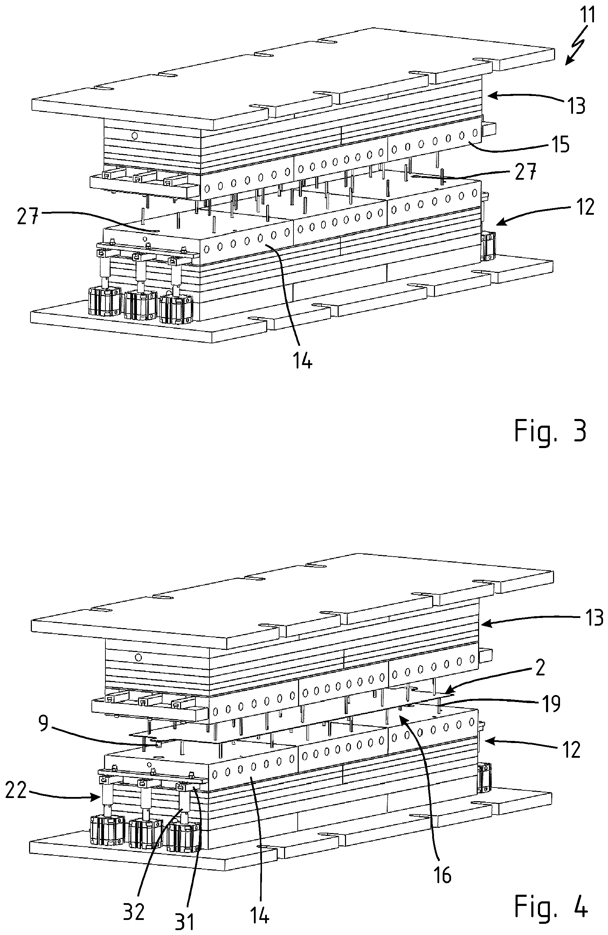

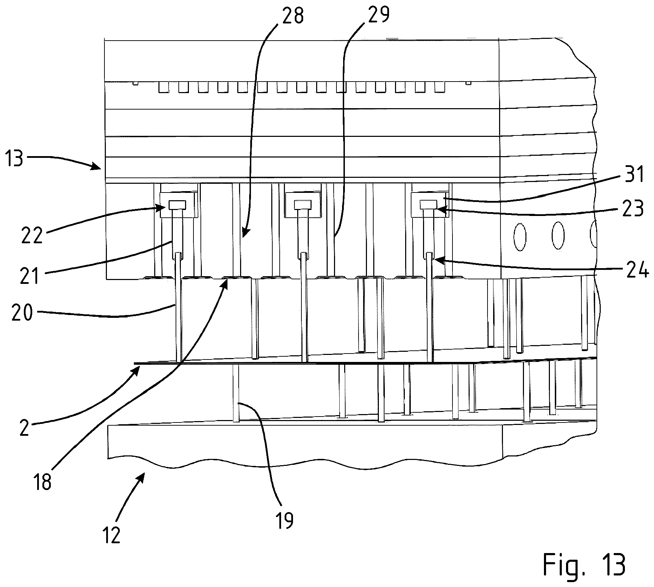

Ein Warmformwerkzeug 11 zur Herstellung einer Wärmeübertragerplatte 3 ist in den Figuren 3 bis 12 dargestellt. Einen Ausschnitt aus dem Warmformwerkzeug 11 zeigt Figur 13. Die Darstellungen des Warmformwerkzeugs 11 sind technisch schematisiert. Aus Gründen der Erläuterung sind Bereiche der Außenwände, der Isolierung sowie der Einhausung nicht dargestellt.

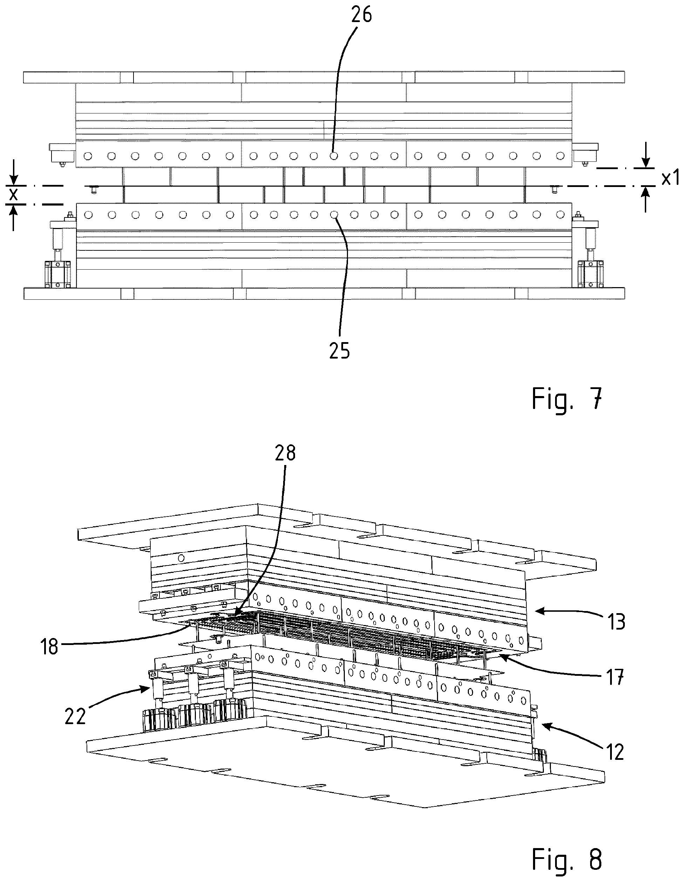

Das Warmformwerkzeug 11 weist ein beheizbares Unterwerkzeug 12 und ein beheizbares Oberwerkzeug 13 auf. Das Unterwerkzeug 12 und das Oberwerkzeug 13 sind segmentiert und sind jeweils aus Werkzeugsegmenten 14 bzw. 15 zusammengesetzt. Das Unterwerkzeug 12 und das Oberwerkzeug 13 besitzen Kontaktflächen 16, 17. In zumindest einer Kontaktfläche 17 ist eine Kanalkavität 18 vorgesehen. Dies ist in der Figur 8 zu erkennen. Die Kanalkavität 18 ist in der Kontaktfläche 17 des Oberwerkzeugs 13 vorgesehen. Die Kontaktfläche 16 im Unterwerkzeug 12 ist eben bzw. glatt und besitzt keine Kanalkavität.

Das Unterwerkzeug 12 weist Abstandselemente 19 auf, welche im Unterwerkzeug 12 nachgiebig und begrenzt verlagerbar angeordnet sind. Auch das Oberwerkzeug 13 weist Abstandselemente 20 auf. Die Abstandselemente 20 des Oberwerkzeugs 13 sind im Oberwerkzeug 13 nachgiebig und begrenzt verlagerbar angeordnet. Die Abstandselemente 19 im Unterwerkzeug 12 und die Abstandselemente 20 im Oberwerkzeug 13 sind relativ zu den Kontaktflächen 16, 17 verlagerbar.

Die Abstandselemente 19 bzw. 20 sind stiftförmig ausgeführt und jeweils in einer Aufnahme 21 im Unterwerkzeug 12 bzw. im Oberwerkzeug 13 geführt angeordnet. Die Abstandselemente 19, 20 wirken jeweils mit Aktuatoren 22 zusammen, welche eine Bewegung der Abstandselemente 19, 20 aus den Aufnahmen 21 heraus bewirken. Bei den Aktuatoren 22 kann es sich um Federelemente oder Linearantriebe handeln. Die Abstandselemente 19, 20 sind gegen die Kraft der Aktuatoren 22 beim Schließen des Warmformwerkzeugs 11 bzw. von Unterwerkzeug 12 und Oberwerkzeug 13 verlagerbar. Der Einfahrweg bzw. der Ausfahrweg der Abstandselemente 19, 20 in den Aufnahmen 21 ist durch eine obere Begrenzung 23 und eine untere Begrenzung 24 begrenzt.

Bei geöffnetem Warmformwerkzeug 11, wobei das Unterwerkzeug 12 und das Oberwerkzeug 13 auseinandergefahren sind, stehen die Abstandselemente 19 des Unterwerkzeugs 12 gegenüber der Kontaktfläche 16 des Unterwerkzeugs 12 vor und die Abstandselemente 20 des Oberwerkzeugs 13 stehen gegenüber der Kontaktfläche 17 im Oberwerkzeug 13 vor.

Eine Abstandsposition A, in welcher die Abstandselemente 19 des Unterwerkzeugs 12 und die Abstandselemente 20 des Oberwerkzeugs 13 aus dem Unterwerkzeug 12 bzw. dem Oberwerkzeug 13 heraus verlagert sind und gegenüber den Kontaktflächen 16, 17 vorstehen, zeigen beispielsweise die Figuren 5 und 6 oder 13.

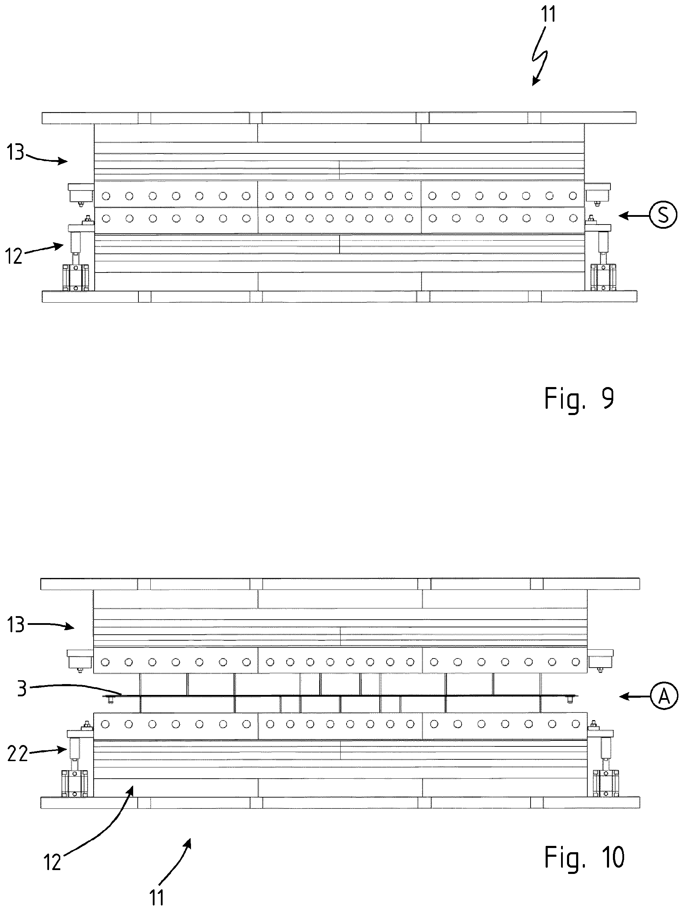

Eine Schließposition S bei geschlossenem Unterwerkzeug 12 und Oberwerkzeug 13, in welcher die Abstandselemente 19 des Unterwerkzeugs 12 im Unterwerkzeug 12 aufgenommen sind und die Abstandselemente 20 des Oberwerkzeugs 13 im Oberwerkzeug 13 aufgenommen sind, zeigt die Figur 9.

Zur Herstellung einer Wärmeübertragerplatte 3 wird ein aus zwei Plattenelementen 1 gebildeter Plattenstapel 2 in das Warmformwerkzeug 11 eingelegt. Die Abstandselemente 19 im Unterwerkzeug 12 stehen gegenüber den Kontaktflächen 16 des Unterwerkzeugs 12 vor. Der Plattenstapel 2 wird auf den Abstandselementen 19 im Unterwerkzeug 12 positioniert.

Das Warmformwerkzeug 11 und dessen Unterwerkzeug 12 und Oberwerkzeug 13 sind auf eine Werkzeugtemperatur TW zwischen 540°C und 670°C aufgeheizt. Insbesondere beträgt die Werkzeugtemperatur TW zwischen 550°C und 640°C. Das Warmformwerkzeug 11 ist mit einer Heizeinrichtung zum Beheizen von Unterwerkzeug 12 und Oberwerkzeug 13 ausgerüstet. Im Unterwerkzeug 12 sind Heizkanäle 25 und im Oberwerkzeug 13 sind Heizkanäle 26 vorgesehen. Das Unterwerkzeug 12 weist jeweils eine Ausnehmung 27 auf, in welcher ein Anschlussstutzen 9 bzw. 10 bei geschlossenem Warmformwerkzeug 11 aufgenommen werden kann.

Zwischen den aneinander liegenden Flächen der Plattenelemente 1 des Plattenstapels 2 ist ein Lotwerkstoff appliziert. Hierzu ist insbesondere ein Plattenelement 1 einseitig mit einer plattierten Lotschicht versehen.

Vor dem Einlegen des Plattenstapels 2 in das Warmformwerkzeug 11 können die Kontaktfläche 16 und/oder die Kontaktfläche 17 von Unterwerkzeug 12 bzw. Oberwerkzeug 13 und/oder die Oberseite und/oder die Unterseite des Plattenstapels 2 mit einem Trennmittel versehen worden sein.

Der aus zwei Plattenelementen 1 gebildete Plattenstapel 2 wird in das Warmformwerkzeug 11 eingelegt. Figur 6 zeigt eine Abstandsstellung A, in welcher der Plattenstapel 2 auf den Abstandselementen 19 mit Abstand x zum Unterwerkzeug 12 aufliegt. Nachdem der Plattenstapel 2 in das Warmformwerkzeug 11 eingelegt und auf den unteren Abstandselementen 19 des Unterwerkzeugs 12 positioniert ist, wird das Warmformwerkzeug 11 geschlossen. Die oberen Abstandselemente 20 im Oberwerkzeug 13 stehen gegenüber der Kontaktfläche 17 des Oberwerkzeugs 13 vor. Beim Schließen des Warmformwerkzeugs 11 werden das Unterwerkzeug 12 und das Oberwerkzeug 13 relativ zueinander verlagert und aufeinander zu bewegt. Hierbei gelangen die vorstehenden Abstandselemente 20 des Oberwerkzeugs 13 oberseitig mit dem Plattenstapel 2 in Kontakt. Der Plattenstapel 2 wird folglich zwischen dem Unterwerkzeug 12 und dem Oberwerkzeug 13 mit Abstand x zum Unterwerkzeug 12 und mit einem Abstand x1 zum Oberwerkzeug 13 zwischen den Abstandselementen 19, 20 gehalten. Auf diese Weise ist sichergestellt, dass der Plattenstapel 2 beim Einlegen in das Warmformwerkzeug 11 nicht unmittelbar in direkten Kontakt mit dem Unterwerkzeug 12 gelangt.

Bei der Fortführung der Schließbewegung wird das Oberwerkzeug 13 weiter in Richtung Unterwerkzeug 12 bewegt. Bei der Schließbewegung werden die Abstandselemente 19 des Unterwerkzeugs 12 in das Unterwerkzeug 12 und die Abstandselemente 20 des Oberwerkzeugs 13 in das Oberwerkzeug 13 verlagert. Hierzu schieben sich die Abstandselemente 19, 20 jeweils in die Aufnahmen 21 im Unterwerkzeug 12 bzw. im Oberwerkzeug 13.

Der Plattenstapel 2 wird zwischen dem Unterwerkzeug 12 und dem Oberwerkzeug 13 eingeklemmt. Dabei liegt der Plattenstapel 2 mit seiner Unterseite in Flächenkontakt mit dem Unterwerkzeug 12 und mit seiner Oberseite in Flächenkontakt mit dem Oberwerkzeug 13. Beim Einklemmen und Halten des Plattenstapels 2 zwischen dem Unterwerkzeug 12 und dem Oberwerkzeug 13 kann eine an einer Oberfläche eines Plattenelements 1 vorhandene Oxidschicht aufgebrochen werden. Hierfür können dafür konfigurierte mechanische Aufbruchelemente vorgesehen sein.

Bei geschlossenem Warmformwerkzeug 11 wird der zwischen dem Unterwerkzeug 12 und dem Oberwerkzeug 13 eingespannte Plattenstapel 2 aufgeheizt. Ein Zwischenraum zwischen den Plattenelementen 1 wird mit Innendruck beaufschlagt. Dies erfolgt durch Einleiten eines Wirkmediums in den Zwischenraum zwischen die Plattenelemente 1. Hierdurch wird ein Kanal 5 durch innendrucktechnische Umformung ausgebildet. Bei der Kanalausformung wird ein Plattenelementbereich des oberen Plattenelements 1 in die Kanalkavität 18 im Oberwerkzeug 13 geformt.

Bei der Kanalausformung wird die Kanalkavität 18 des Warmformwerkzeugs 11 nach außen entlüftet. Hierzu ist eine Entlüftung 28 vorgesehen. Die Entlüftung 28 weist Entlüftungsbohrungen 29 auf, welche mit der Kanalkavität 18 kommunizieren. Eine Ableitung von Luft und damit ein Druckausgleich kann auch über die Spalte zwischen den Werkzeugsegmenten 15 des Oberwerkzeugs 13 erfolgen. Die Entlüftung 28 stellt sicher, dass Luft aus der Kanalkavität 18 im Oberwerkzeug 13 entweichen kann, während der Kanal 5 in dem Plattenelement 1 ausgeformt wird. Die Entlüftung 28 bewirkt, dass der Werkstoff im Plattenelementbereich des oberen Plattenelements 1 entlang der Kanalkavität 18 in diese gegendrucklos geformt und der Kanal 5 ausgeformt werden kann.

Der Plattenstapel 2 kann bei der innendrucktechnischen Umformung umlaufend entlang aneinander liegender Randbereiche 30 und/oder benachbart zu der Kanalkavität 18 mittels eines oder mehrerer Druckelemente abgedichtet werden. Hierzu ist das Warmformwerkzeug 11 bzw. dessen Unterwerkzeug 12 und/oder Oberwerkzeug 13 mit Druckelementen ausgerüstet, welche dazu vorgesehen und bestimmt sind, den Plattenstapel 2 umlaufend entlang dem äußeren Randbereich 30 und/oder benachbart zu der Kanalkavität 18 abzudichten. Solche Druckelemente können beispielsweise in Form von sickenförmigen Körpern realisiert sein.

Der zwischen den Plattenelementen 1 applizierte Lotwerkstoff schmilzt bzw. ist beim Aufheizen der Plattenelemente 1 geschmolzen.

Nach dem Ausformen der Kanalstruktur 4 mit dem Kanal 5 wird das Warmformwerkzeug 11 geöffnet. Beim Öffnen des Warmformwerkzeugs 11 werden das Unterwerkzeug 12 und das Oberwerkzeug 13 relativ zueinander verlagert. Das Oberwerkzeug 13 wird vom Unterwerkzeug 12 weg bewegt, wobei gleichzeitig die Abstandselemente 19 des Unterwerkzeugs 12 aus dem Unterwerkzeug 12 und die Abstandselemente 20 des Oberwerkzeugs 13 aus dem Oberwerkzeug 13 heraus bewegt werden. Der gefügte Plattenstapel 2 wird auf den unteren Abstandselementen 19 im Unterwerkzeug 12 in einem Abstand x vom Unterwerkzeug 12 gehalten. Die Abstandselemente 20 des Oberwerkzeugs 13 sind aus dem Oberwerkzeug 13 heraus bewegt und kontaktieren den Plattenstapel 2 oberseitig. Der mit der Kanalstruktur 4 versehene Plattenstapel 2 wird zwischen den Abstandselementen 19, 20 gehalten und kann abkühlen. Der aufgeschmolzene Lotwerkstoff erstarrt und die Plattenelemente 1 des Plattenstapels 2 werden löttechnisch gefügt.

Beim Öffnen des Warmformwerkzeugs 11 bewegt sich das Oberwerkzeug 13 vom Unterwerkzeug 12 und dem Plattenstapel 2 weg. Gleichzeitig bewegen sich die Abstandselemente 20 des Oberwerkzeugs 13 aus diesem heraus und bleiben im Kontakt mit der Oberseite des Plattenstapels 2. Die oberen Abstandselemente 20 halten und fixieren den Plattenstapel 2 bei der Öffenbewegung des Warmformwerkzeugs 11 während der Plattenstapel 2 bzw. die fertig geformte Wärmeübertragerplatte 3 vom Unterwerkzeug 12 durch die unteren Abstandselemente 19 angehoben wird.

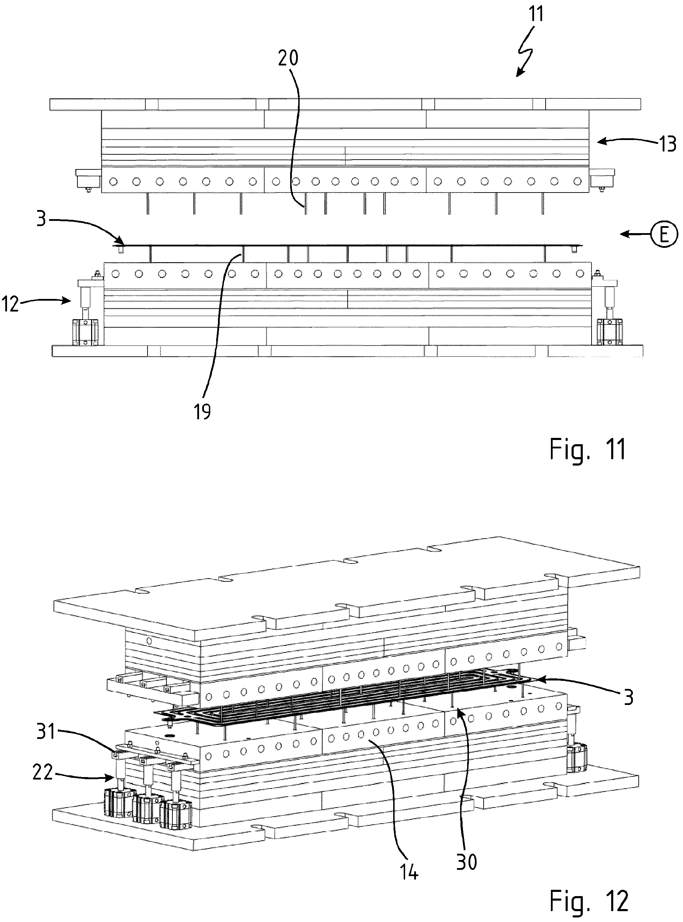

Das Warmformwerkzeug 11 wird weiter geöffnet. Hierbei wird das Oberwerkzeug 13 weiter vom Unterwerkzeug 12 weg bewegt. Das Warmformwerkzeug 11 wird bis in eine Entnahmeposition E geöffnet (siehe Figur 11) und die Wärmeübertragerplatte 3 kann aus dem Warmformwerkzeug 11 entnommen werden.

Die Aktuatoren 22 sind dafür bestimmt und eingerichtet, die Abstandselemente 19 bzw. 20 in den Führungen im Unterwerkzeug 12 bzw. im Oberwerkzeug 13 zu verlagern. Die Aktuatoren 22 der Aktuatoreinrichtung des Unterwerkzeugs 12 wirken mit den Abstandselementen 19 zusammen und heben die Wärmeübertragerplatte 3 nach dem Warmformvorgang und Öffnen des Warmformwerkzeugs 11 an. Die von oben gegen die Wärmeübertragerplatte 3 wirkenden Abstandselemente 20 des Oberwerkzeugs 13 halten die Wärmeübertragerplatte 3 beim Öffnen des Warmformwerkzeugs 11 und dem Abkühlvorgang in Position. Die Aktuatoren 22 weisen jeweils eine das Unterwerkzeug 12 in Längsrichtung durchsetzende Betätigungsleiste 31 auf, die mit den Abstandselementen 19 des Unterwerkzeugs 12 zusammen wirken. Die Betätigungsleisten 31 werden durch außen an den freien Enden der Betätigungsleisten 31 angreifende Linearantriebe 32 betätigt.

Die Betätigung des Abstandselemente 19, 20 erfolgt selbsttätig oder gesteuert in Abhängigkeit von der Bewegung von Unterwerkzeug 12 und Oberwerkzeug 13 bzw. betätigt und/oder gesteuert durch das Unterwerkzeug 12 und das Oberwerkzeug 13.

### Bezugszeichen:

- 1 -: Plattenelement
- 2 -: Plattenstapel
- 3 -: Wärmeübertragerplatte
- 4 -: Kanalstruktur
- 5 -: Kanal
- 6 -: Kanalabschnitt
- 7 -: Fluidanschluss
- 8 -: Fluidanschluss
- 9 -: Anschlussstutzen
- 10-: Anschlussstutzen
- 11 -: Warmformwerkzeug
- 12 -: Unterwerkzeug
- 13 -: Oberwerkzeug
- 14 -: Werkzeugsegment
- 15 -: Werkzeugsegment
- 16 -: Kontaktfläche v. 12
- 17 -: Kontaktfläche v. 13
- 18 -: Kanalkavität
- 19 -: Abstandselement v. 12
- 20 -: Abstandselement v. 13
- 21 -: Aufnahme
- 22 -: Aktuatoren
- 23 -: obere Begrenzung
- 24 -: untere Begrenzung
- 25 -: Heizkanal v. 12
- 26 -: Heizkanal v. 13
- 27 -: Ausnehmung
- 28 -: Entlüftung
- 29 -: Entlüftungsbohrungen
- 30 -: Randbereich
- 31 -: Betätigungsleiste
- 32 -: Linearantrieb

- A -: Abstandsposition
- E -: Entnahmeposition
- S -: Schließposition
- TW -: Werkzeugtemperatur
- x -: Abstand
- x1 -: Abstand

## Patentansprüche

1. Verfahren zum Herstellen einer Wärmeübertragerplatte (3) mit folgenden Schritten:
• Bereitstellen eines Plattenstapels (2), welcher aus zumindest zwei Plattenelementen (1) aus einem metallischen Werkstoff mit einem zwischen den Plattenelemente (1) angeordneten Lotwerkstoff gebildet wird;
• Überführen des Plattenstapels (2) in ein beheiztes ein Unterwerkzeug (12) und ein Oberwerkzeug (13) aufweisendes Warmformwerkzeug (11), welches Kontaktflächen (16, 17) mit zumindest einer Kanalkavität (18) aufweist;
• Einlegen des Plattenstapels (2) in das Warmformwerkzeug (11), wobei der Plattenstapel (2) auf Abstandelementen (19) positioniert wird, welche im Unterwerkzeug (12) nachgiebig angeordnet sind und gegenüber der Kontaktfläche (16) des Unterwerkzeugs (12) vorstehen;
• Schließen des Warmformwerkzeugs (11), wobei das Unterwerkzeug (12) und das Oberwerkzeug (13) relativ zueinander verlagert werden;
• Fortführen der Schließbewegung und Einklemmen des Plattenstapels (2) zwischen dem Unterwerkzeug (12) und dem Oberwerkzeug (13), wobei die Abstandselemente (19) im Unterwerkzeug (12) in das Unterwerkzeug (12) verlagert werden und der Plattenstapel (2) in Flächenkontakt zwischen dem Unterwerkzeug (12) und dem Oberwerkzeug (13) gelangt;
• Aufheizen des Plattenstapels (2) und
• Beaufschlagung eines Zwischenraums zwischen den Plattenelementen (1) des Plattenstapels (2) mit Innendruck durch Einleiten eines Wirkmediums und Ausbilden eines Kanals (5) durch innendrucktechnische Umformung zumindest eines Plattenelementbereichs in die Kanalkavität (18), wobei die Kanalkavität (18) entlüftet wird und
• Schmelzen des Lotwerkstoffs zwischen den Plattenelementen (1) und löttechnische Fügung der Plattenelemente (1) an in Anlage befindlichen Fügeflächen der Plattenelemente (1);
• Öffnen des Warmformwerkzeugs (11), wobei das Unterwerkzeug (12) und das Oberwerkzeug (13) relativ zueinander verlagert werden, wobei die Abstandselemente (19) im Unterwerkzeug (12) aus dem Unterwerkzeug (12) bewegt werden, so dass der Plattenstapel (2) auf den Abstandselementen (19) im Unterwerkzeug (12) in einem Abstand vom Unterwerkzeug (12) gehalten wird;
• Halten und Abkühlen des Plattenstapels (2);
• Öffnen des Warmformwerkzeug (11) bis in eine Entnahmeposition (E) und Entnahme der Wärmeübertragerplatte (3) aus dem Warmformwerkzeug (11).

2. Verfahren nach Anspruch 1, **dadurch gekennzeichnet, dass** beim Schließen des Warmformwerkzeugs (11) im Oberwerkzeug (13) angeordnete Abstandselemente (20), welche im Oberwerkzeug (13) nachgiebig angeordnet sind und gegenüber der Kontaktfläche (17) des Oberwerkzeugs (13) vorstehen mit dem Plattenstapel (2) in Kontakt gelangen.

3. Verfahren nach Anspruch 2, **dadurch gekennzeichnet, dass** die Abstandselemente (20) im Oberwerkzeug (13) beim Schließen des Warmformwerkzeugs (11) in das Oberwerkzeug (13) verlagert werden.

4. Verfahren nach Anspruch 2 oder 3, **dadurch gekennzeichnet, dass** beim Öffnen des Warmformwerkzeugs (11) die Abstandselemente (20) im Oberwerkzeug (13) aus dem Oberwerkzeug (13) bewegt werden.

5. Verfahren nach einem der Ansprüche 1 bis 4, **dadurch gekennzeichnet, dass** das Warmformwerkzeug (11) auf eine Werkzeugtemperatur (TW) zwischen 540°C und 670°C, insbesondere zwischen 550°C und 640°C, aufgeheizt ist.

6. Verfahren nach einem der Ansprüche 1 bis 5, **dadurch gekennzeichnet, dass** ein Plattenelement (1) vor dem Bilden des Plattenstapels (2) oder die Plattenelemente (1) beim Bilden des Plattenstapels (2) oder der Plattenstapel (2) mit einem Fluidanschluss (7, 8) versehen wird bzw. werden.

7. Verfahren nach Anspruch 6, **dadurch gekennzeichnet, dass** das Wirkmedium über den Fluidanschluss (7, 8) eingeleitet wird.

8. Verfahren nach einem der Ansprüche 1 bis 7, **dadurch gekennzeichnet, dass** der Plattenstapel (2) bei der innendrucktechnischen Umformung umlaufend entlang aneinander liegender Randbereiche (30) und/oder benachbart zu der Kanalkavität (18) mittels eines oder mehrerer Druckelemente abgedichtet wird.

9. Verfahren nach einem der Ansprüche 1 bis 8, **dadurch gekennzeichnet, dass** Plattenelemente (1) aus einer Aluminiumlegierung verwendet werden.

10. Verfahren nach einem der Ansprüche 1 bis 9, **dadurch gekennzeichnet, dass** ein Plattenelement (1) verwendet wird, welches mit einem Lotwerkstoff in Form einer plattierten Lotschicht versehen ist.

11. Verfahren nach einem der Ansprüche 1 bis 10, **dadurch gekennzeichnet, dass** beim Einklemmen und Halten des Plattenstapels (2) zwischen dem Unterwerkzeug (12) und dem Oberwerkzeug (13) mindestens eine an einer Oberfläche eines Plattenelements (1) vorhandene Oxidschicht aufgebrochen wird.

12. Verfahren nach einem der Ansprüche 1 bis 11, **dadurch gekennzeichnet, dass** die löttechnische Fügung flussmittelfrei durchgeführt wird.

13. Verfahren nach einem der Ansprüche 1 bis 12, **dadurch gekennzeichnet, dass** das die Abstandelemente (19, 20) selbsttätig oder aktuatorisch verlagert werden.

14. Verfahren nach einem der Ansprüche 1 bis 13, **dadurch gekennzeichnet, dass** zwischen die Kontaktflächen (16, 17) des Warmformwerkzeugs (11) und den Außenflächen der Plattenelemente (1) oder des Plattenstapels (2) ein Trennmittel eingebracht wird.

15. Warmformwerkzeug (11) zur Herstellung einer Wärmeübertragerplatte (3), welches ein beheizbares Unterwerkzeug (12) und ein beheizbares Oberwerkzeug (13) aufweist, wobei das Unterwerkzeug (12) und das Oberwerkzeug (13) Kontaktflächen (16, 17) besitzen und in zumindest einer Kontaktfläche (17) eine Kanalkavität (18) vorgesehen ist, **dadurch gekennzeichnet, dass** das Unterwerkzeug (12) Abstandselemente (19) aufweist, welche im Unterwerkzeug (12) nachgiebig angeordnet sind und das Oberwerkzeug (13) Abstandselemente (20) aufweist, welche im Oberwerkzeug (13) nachgiebig angeordnet sind, wobei die Abstandselemente (19, 20) relativ zu den Kontaktflächen (16, 17) verlagerbar sind und in einer Abstandsposition (A) bei geöffnetem Unterwerkzeug (12) und Oberwerkzeug (13) gegenüber den Kontaktflächen (16, 17) vorstehen und in einer Schließposition (S) bei geschlossenem Unterwerkzeug (12) und Oberwerkzeug (13) im Unterwerkzeug (12) und im Oberwerkzeug (13) aufgenommen sind und wobei die Kanalkavität (18) mit einer Entlüftung (28) kommuniziert.

16. Warmformwerkzeug (11) nach Anspruch 15, **dadurch gekennzeichnet, dass** im Oberwerkzeug (13) und/oder im Unterwerkzeug (12) eine Entlüftung (28) vorgesehen ist.

17. Warmformwerkzeug (11) nach Anspruch 15 oder 16, **dadurch gekennzeichnet, dass** die im Oberwerkzeug (13) angeordneten Abstandselemente (20) und/oder die im Unterwerkzeug (12) angeordneten Abstandselemente (19) eine obere Begrenzung (23) und/oder eine untere Begrenzung (24) aufweisen.

## Claims

1. Method for manufacturing a heat exchanger plate (3) comprising the following steps:
- providing a plate stack (2), which is formed from at least two plate elements (1) made of a metallic material with a solder material arranged between the plate elements (1),
- transferring the plate stack (2) into a heated hot forming tool (11) having a lower tool (12) and an upper tool (13), which has contact surfaces (16, 17) with at least one channel cavity (18),
- inserting the plate stack (2) into the hot forming tool (11), wherein the plate stack (2) is positioned on spacer elements (19), which are arranged flexibly in the lower tool (12) and project relative to the contact surface (16) of the lower tool (12),
- closing the hot forming tool (11), wherein the lower tool (12) and the upper tool (13) are displaced relative to each other,
- continuing the closing movement and clamping the plate stack (2) between the lower tool (12) and the upper tool (13), wherein the spacer elements (19) in the lower tool (12) are displaced into the lower tool (12) and the plate stack (2) comes into surface contact between the lower tool (12) and the upper tool (13),
- heating the plate stack (2) and
- applying internal pressure to a space between the plate elements (1) of the plate stack (2) by introducing an active medium and forming a channel (5) by using internal pressure to transform at least one plate element region into the channel cavity (18), wherein the channel cavity (18) is vented, and
- melting the solder material between the plate elements (1) and joining the plate elements (1), by soldering to joining surfaces of the plate elements (1) that are in contact,
- opening the hot forming tool (11), wherein the lower tool (12) and the upper tool (13) are displaced relative to each other, wherein the spacer elements (19) are moved in the lower tool (12) out of the lower tool (12), such that the plate stack (2) is held at a distance from the lower tool (12) on the spacer elements (19) in the lower tool (12),
- holding and cooling the plate stack (2),
- opening the hot forming tool (11) until a removal position (E) is reached and removing the heat exchanger plate (3) from the hot forming tool (11).

2. Method according to claim 1, **characterised in that** spacer elements (20) arranged in the upper tool (13), which are arranged flexibly in the upper tool (13) and project relative to the contact surface (17) of the upper tool (13), come into contact with the plate stack (2) when the hot forming tool (11) is closed.

3. Method according to claim 2, **characterised in that** the spacer elements (20) in the upper tool (13) are displaced into the upper tool (13) when the hot forming tool (11) is closed.

4. Method according to claim 2 or 3, **characterised in that** the spacer elements (20) are moved in the upper tool (13) out of the upper tool (13) when the hot forming tool (11) is opened.

5. Method according to any one of claims 1 to 4, **characterised in that** the hot forming tool (11) is heated to a tool temperature (TW) between 540°C and 670°C, in particular between 550°C and 640°C.

6. Method according to any one of claims 1 to 5, **characterised in that** a plate element (1), before the plate stack (2) is formed, or the plate elements (1), when the plate stack (2) is formed, or the plate stack (2) is and/or will be provided with a fluid connection (7, 8).

7. Method according to claim 6, **characterised in that** the active medium is introduced via the fluid connection (7, 8).

8. Method according to any one of claims 1 to 7, **characterised in that**, during internal pressure transformation, the plate stack (2) is sealed circumferentially along edges (30) adjoining each other and/or adjacent to the channel cavity (18) by means of one or more pressure elements.

9. Method according to any one of claims 1 to 8, **characterised in that** plate elements (1) made of an aluminum alloy are used.

10. Method according to any one of claims 1 to 9, **characterised in that** a plate element (1), which is provided with a solder material in the form of a plated solder layer, is used.

11. Method according to any one of claims 1 to 10, **characterised in that**, when clamping and holding the plate stack (2) between the lower tool (12) and the upper tool (13), at least one oxide layer present on a surface of the plate element (1) is broken open.

12. Method according to any one of claims 1 to 11, **characterised in that** joining by soldering is performed without flux.

13. Method according to any one of claims 1 to 12, **characterised in that** the spacer elements (19, 20) are displaced automatically or by an actuator.

14. Method according to any one of claims 1 to 13, **characterised in that** a release agent is introduced between the contact surfaces (16, 17) of the hot forming tool (11) and the outer surfaces of the plate elements (1) or the plate stack (2).

15. Hot forming tool (11) for manufacturing a heat exchanger plate (3), which has a heatable lower tool (12) and a heatable upper tool (13), wherein the lower tool (12) and the upper tool (13) have contact surfaces (16, 17) and a channel cavity (18) is provided in at least one contact surface (17), **characterised in that** the lower tool (12) has spacer elements (19), which are arranged flexibly in the lower tool (12) and the upper tool (13) has spacer elements (20), which are arranged flexibly in the upper tool (13), wherein the spacer elements (19, 20) can be displaced relative to the contact surfaces (16, 17) and, in a spaced position (A) with the lower tool (12) and the upper tool (13) opened, project relative to the contact surfaces (16, 17) and, in a closed position (S) with the lower tool (12) and upper tool (13) closed, are accommodated in the lower tool (12) and in the upper tool (13) and wherein the channel cavity (18) communicates with a vent (28).

16. Hot forming tool (11) according to claim 15, **characterised in that** a vent (28) is provided in the upper tool (13) and/or in the lower tool (12).

17. Hot forming tool (11) according to claim 15 or 16, **characterised in that** the spacer elements (20) arranged in the upper tool (13) and/or the spacer elements (19) arranged in the lower tool (12) have an upper limit (23) and/or a lower limit (24).

## Revendications

1. Procédé de fabrication d'une plaque d'échange de chaleur (3) comprenant les étapes suivantes :
- fournir une pile de plaques (2) qui est formée à partir d'au moins deux éléments de plaque (1) d'un matériau métallique avec un matériau de brasage agencé entre les éléments de plaque (1) ;
- transférer la pile de plaques (2) dans un outil de thermoformage (11) chauffé présentant un outil inférieur (12) et un outil supérieur (13) qui présente des surfaces de contact (16, 17) avec au moins une cavité de canal (18) ;
- insérer la pile de plaques (2) dans l'outil de thermoformage (11), dans lequel la pile de plaques (2) est positionnée sur des éléments d'espacement (19) qui sont agencés de manière flexible dans l'outil inférieur (12) et font saillie par rapport à la surface de contact (16) de l'outil inférieur (12) ;
- fermer l'outil de thermoformage (11), dans lequel l'outil inférieur (12) et l'outil supérieur (13) sont déplacés l'un par rapport à l'autre ;
- poursuivre le mouvement de fermeture et enserrer la pile de plaque (2) entre l'outil inférieur (12) et l'outil supérieur (13), dans lequel les éléments d'espacement (19) dans l'outil inférieur (12) sont déplacés dans l'outil inférieur (12) et la pile de plaques (2) entre en contact superficiel entre l'outil inférieur (12) et l'outil supérieur (13) ;
- chauffer la pile de plaques (2) et
- appliquer une pression intérieure à un espace intermédiaire entre les éléments de plaque (1) de la pile de plaques (2) en introduisant un milieu actif et en formant un canal (5) en utilisant une pression intérieure pour transformer au moins une zone d'élément de plaque dans la cavité de canal (18), dans lequel la cavité de canal (18) est ventilée et
- fondre le matériau de brasage entre les éléments de plaque (1) et joindre par technique de brasage les éléments de plaque (1) au niveau des surfaces de jonction se trouvant en contact des éléments de plaque ;
- ouvrir l'outil de thermoformage (11), dans lequel l'outil inférieur (12) et l'outil supérieur (13) sont déplacés l'un par rapport à l'autre, dans lequel les éléments d'espacement (19) sont déplacés dans l'outil inférieur (12) à partir de l'outil inférieur (12), de sorte que la pile de plaques (2) est maintenue sur les éléments d'espacement (19) dans l'outil inférieur (12) à distance de l'outil inférieur (12) ;
- maintenir et refroidir la pile de plaques (2) ;
- ouvrir l'outil de thermoformage (11) jusqu'à ce qu'une position de prélèvement (E) soit atteinte et retirer la plaque d'échange de chaleur (3) de l'outil de thermoformage (11).

2. Procédé selon la revendication 1, **caractérisé en ce que**, lors de la fermeture de l'outil de thermoformage (11), des éléments d'espacement (20) agencés dans l'outil supérieur (13) qui sont agencés de manière flexible dans l'outil supérieur (13) et font saillie par rapport à la surface de contact (17) de l'outil supérieur (13) entrent en contact avec la pile de plaques (2).

3. Procédé selon la revendication 2, **caractérisé en ce que** les éléments d'espacement (20) sont déplacés dans l'outil supérieur (13) lors de la fermeture de l'outil de thermoformage (11) dans l'outil supérieur (13).

4. Procédé selon la revendication 2 ou 3, **caractérisé en ce que**, lors de l'ouverture de l'outil de thermoformage (11), les éléments d'espacement (20) sont déplacés dans l'outil supérieur (13) à partir de l'outil supérieur (13).

5. Procédé selon l'une quelconque des revendications 1 à 4, **caractérisé en ce que** l'outil de thermoformage (11) est chauffé à une température d'outil (TW) comprise entre 540 °C et 670 °C, en particulier entre 550 °C et 640 °C.

6. Procédé selon l'une quelconque des revendications 1 à 5, **caractérisé en ce qu'**un élément de plaque (1), avant la formation de la pile de plaques (2) ou les éléments de plaques (1), lors de la formation de la pile de plaques (2), ou la pile de plaques (2) sont/seront pourvus d'un raccordement de fluide (7, 8).

7. Procédé selon la revendication 6, **caractérisé en ce que** le milieu actif est introduit par le biais du raccordement de fluide (7, 8).

8. Procédé selon l'une quelconque des revendications 1 à 7, **caractérisé en ce que** la pile de plaques (2) est étanchéifiée lors de la transformation par pression intérieure circonférentiellement le long des zones de bordure (30) contiguës et/ou adjacentes à la cavité de canal (18) au moyen d'un ou de plusieurs éléments de pression.

9. Procédé selon l'une quelconque des revendications 1 à 8, **caractérisé en ce que** des éléments de plaque (1) en un alliage d'aluminium sont utilisés.

10. Procédé selon l'une quelconque des revendications 1 à 9, **caractérisé en ce qu'**un élément de plaque (1) qui est pourvu d'un matériau de brasage sous la forme d'une couche de brasage plaquée est utilisé.

11. Procédé selon l'une quelconque des revendications 1 à 10, **caractérisé en ce que**, lors du serrage et du maintien de la pile de plaques (2) entre l'outil inférieur (12) et l'outil supérieur (13), au moins une couche d'oxyde présente sur une surface d'un élément de plaque (1) est rompue.

12. Procédé selon l'une quelconque des revendications 1 à 11, **caractérisé en ce que** l'assemblage par brasage est réalisé sans flux.

13. Procédé selon l'une quelconque des revendications 1 à 12, **caractérisé en ce que** les éléments d'espacement (19, 20) sont déplacés automatiquement ou par actionnement.

14. Procédé selon l'une quelconque des revendications 1 à 13, **caractérisé en ce qu'**un agent de séparation est incorporé entre les surfaces de contact (16, 17) de l'outil de thermoformage (11) et les surfaces extérieures des éléments de plaque (1) ou de la pile de plaques (2).

15. Outil de thermoformage (11) pour la fabrication d'une plaque d'échange de chaleur (3) qui présente un outil inférieur (12) pouvant être chauffé et un outil supérieur (13) pouvant être chauffé, dans lequel l'outil inférieur (12) et l'outil supérieur (13) possèdent des surfaces de contact et une cavité de canal (18) est prévue dans au moins une surface de contact (17), **caractérisé en ce que** l'outil inférieur (12) présente des éléments d'espacement (19) qui sont agencés de manière flexible dans l'outil inférieur (12) et l'outil supérieur (13) présente des éléments d'espacement (20) qui sont agencés de manière flexible dans l'outil supérieur (13), dans lequel les éléments d'espacement (19, 20) peuvent être déplacés par rapport aux surfaces de contact (16, 17) et font saillie par rapport aux surfaces de contact (16, 17) dans une position d'espacement (A) avec l'outil inférieur 12) et l'outil supérieur ouverts et sont reçus dans l'outil inférieur (12) et dans l'outil supérieur (13) dans une position de fermeture (S) avec l'outil inférieur (12) et l'outil supérieur (13) fermés et dans lequel la cavité de canal (18) communique avec une ventilation (28).

16. Outil de thermoformage (11) selon la revendication 15, **caractérisé en ce qu'**une ventilation (28) est prévue dans l'outil supérieur (13) et/ou dans l'outil inférieur (12).

17. Outil de thermoformage (11) selon la revendication 15 ou 16, **caractérisé en ce que** les éléments d'espacement (20) agencés dans l'outil supérieur (13) et/ou les éléments d'espacement (19) agencés dans l'outil inférieur (12) présentent une limite supérieure (23) et/ou une limite inférieure (24).
